# NEUE EUROPÄISCHE PATENTSCHRIFT

(11) **EP 2 079 940 B2**
(45) Veröffentlichungstag und Bekanntmachung des Hinweises auf die Entscheidung über den Einspruch: **31.07.2013**
(45) Hinweis auf die Patenterteilung: 14.07.2010
(21) Anmeldenummer: 08707769.9
(22) Anmeldetag: 19.02.2008
(51) Int. Cl.: F16F 9/54

(54) **STOSSDÄMPFER**
SHOCK ABSORBERS
AMORTISSEUR DE CHOCS

(30) Priorität: 23.03.2007 DE 102007014124
(43) Veröffentlichungstag der Anmeldung: 22.07.2009
(73) Patentinhaber: SAF-HOLLAND GmbH, 63856 Bessenbach (DE)
(72) Erfinder: SCHEWERDA, Steffen, 63739 Aschaffenburg (DE)
(74) Vertreter: Müller Schupfner & Partner
(86) Internationale Anmeldenummer: PCT/EP2008/001280
(87) Internationale Veröffentlichungsnummer: WO 2008/116536

(56) Entgegenhaltungen:
- EP-A- 1 840 407
- EP-A- 1 884 379
- DE-C1- 4 318 558
- DE-C1- 19 823 878

## Beschreibung

Die vorliegende Erfindung bezieht sich auf einen Stoßdämpfer, insbesondere für Kraftfahrzeuge, welcher ausgelegt ist, die auf ein Fahrzeugachssystem des Kraftfahrzeugs wirkenden Stöße bzw. Schwingungen zu dämpfen.

Stoßdämpfer sind hinlänglich aus dem Stand der Technik bekannt. So existieren Stoßdämpfer, die aus einem Zylinder und einem in diesem geführten Kolben ausgebildet sind, wobei an den distalen Endbereichen des Zylinders bzw. Kolbens Montageaugen vorgesehen sind, um den Stoßdämpfer an einem Rahmenelement sowie einem hierzu beweglichen Achselement des Fahrzeugs zu befestigen. Die Stoßdämpfer sind in der Regel im Fahrzeug vertikal angeordnet. Es existieren jedoch auch Anordnungen von Stoßdämpfern, bei welchen der Stoßdämpfer geneigt angeordnet ist. Unabhängig von der Anordnung der Stoßdämpfer besteht die Gefahr, daß der Stoßdämpfer in der falschen Einbaulage montiert wird, was zum Versagen des Stoßdämpfers führt. So würde ein Stoßdämpfer, dessen oberes Montageauge unten und dessen unteres Montageauge oben montiert wird (d.h. einer Verdrehung um die Querachse) nicht ordnungsgemäß funktionieren. Darüber hinaus existieren Stoßdämpfer, bei welchen die rotatorische Lage ebenfalls vorgegeben ist, so daß eine Verdrehung des Stoßdämpfers um 180 Grad um die Längsachse zu einer nicht ordnungsgemäßen Funktionsweise führen würde.

Die DE 198 23 878 betrifft einen Zweirohr-Schwingungsdämpfer, welcher fähig ist, unterschiedliche Längenausdehnungen zwischen dem Behälter und dem Zylinder aufgrund von Temperaturschwankungen auszugleichen, indem ein Ausgleichselement verwendet wird, welches zwischen dem Zylinder und einem den Zylinder mit radialem Abstand umgebenden Behälter angeordnet ist.

Es ist daher Aufgabe der vorliegenden Erfindung, einen Stoßdämpfer, insbesondere für Kraftfahrzeuge, vorzusehen, der eine korrekte Einbaulage im Kraftfahrzeug herstellt.

Diese Aufgabe wird durch einen Stoßdämpfer, insbesondere für Kraftfahrzeuge, mit den Merkmalen des Anspruchs 1 gelöst. Bevorzugte Ausführungsformen sind Gegenstand der abhängigen Ansprüche.

Erfindungsgemäß ist ein Stoß- bzw. Schwingungsdämpfer, insbesondere für Kraftfahrzeuge, vorgesehen, umfassend einen ersten und zweiten gegeneinander beweglichen Abschnitt, wobei der erste und zweite Abschnitt jeweils am distalen Endbereich einen ersten bzw. zweiten Befestigungsabschnitt aufweist, und wobei an dem ersten Befestigungsabschnitt ein erstes Befestigungselement und an dem zweiten Befestigungsabschnitt ein zweites Befestigungselement vorgesehen sind, welche verschieden ausgebildet und in bezug auf die Stoßdämpferlängsachse verschieden angeordnet sind. Vorteilhafterweise sind der erste und zweite Abschnitt ineinander derart geführt, daß der erste und zweite Abschnitt im wesentlichen entlang der Stoßdämpferlängsachse bzw. parallel zur Stoßdämpferlängsachse in einer vorzugsweise linearen bzw. translatorischen Richtung verschieblich zueinander ausgebildet sind. Die freien bzw. distalen Endbereiche des ersten und zweiten Abschnitts weisen jeweils einen Befestigungsabschnitt auf. Dieser weist jeweils ein Befestigungselement auf, um den ersten bzw. zweiten Abschnitt an einem Rahmenelement bzw. dem hierzu beweglichen Achselement des Fahrzeugs zu befestigen. Erfindungsgemäß sind das am ersten Befestigungsabschnitt ausgebildete erste Befestigungselement und das am zweiten Befestigungsabschnitt ausgebildete zweite Befestigungselement verschieden ausgebildet. In anderen Worten können sich das erste und zweite Befestigungselement in ihren geometrischen Abmessungen voneinander unterscheiden. So kann das erste Befestigungselement eine geometrische Innen- und/oder Außenkonfiguration aufweisen, die sich von derjenigen des zweiten Befestigungselements unterscheidet, so daß die Befestigungsmittel für das erste Befestigungselement nicht mit dem zweiten Befestigungselement in Eingriff bringbar sind.

Das erste Befestigungselement und das zweite Befestigungselement sind in bezug auf die Stoßdämpferlängsachse verschieden angeordnet oder positioniert. Auch hierdurch wird gewährleistet, daß die Befestigungsmittel für das erste Befestigungselement bei einer nicht ordnungsgemäßen Montage des Stoßdämpfers nicht mit dem zweiten Befestigungselement in Eingriff gelangen können. Somit wird vorteilhafterweise ein Stoßdämpfer bzw. Schwingungsdämpfer bereitgestellt, bei welchem eine verdrehte Einbaulage während der Montage verhindert wird, da sich das erste vom zweiten Befestigungselement derart unterscheidet, daß diese nur mit dem jeweils zugeordneten Befestigungsmittel am Fahrzeug befestigbar sind und bei falscher Einbaulage nicht in Eingriff gelangen bzw. moniert können.

Vorteilhafterweise ist das erste Befestigungselement zur Stoßdämpferlängsachse im wesentlichen mittig angeordnet. Die Stoßdämpferlängsachse entspricht im wesentlichen der Bewegungsrichtung des ersten und zweiten Abschnitts zueinander, bzw. ist parallel hierzu ausgerichtet. Das erste Befestigungselement ist in anderen Worten somit symmetrisch zur Stoßdämpferlängsachse derart angeordnet, daß sich das erste Befestigungselement in einer Querrichtung um den im wesentlichen gleichen Betrag, ausgehend von der Stoßdämpferlängsachse, in eine gegenüberliegende Richtung erstreckt. Die Mitte bzw. Symmetrieachse des ersten Befestigungselements entspricht bzw. fluchtet somit im wesentlichen mit der Stoßdämpferlängsachse.

Weiterhin bevorzugt ist das zweite Befestigungselement zur Stoßdämpferlängsachse im wesentlichen außermittig bzw. nicht symmetrisch zur Stoßdämpferlängsachse angeordnet. In anderen Worten sind die freien Enden des zweiten Befestigungselements in Bezug auf die Stoßdämpferlängsachse in unterschiedlicher Entfernung angeordnet. Somit sind die Mitte bzw. Symmetrieachse des zweiten Befestigungselements und die Stoßdämpferlängsachse vorteilhafterweise voneinander beabstandet. Dies führt dazu, daß das zweite Befestigungselement zur Stoßdämpferlängsachse im wesentlichen asymmetrisch angeordnet ist, so daß eine Verdrehung bzw. Rotation des Stoßdämpfers um 180 Grad um die Stoßdämpferlängsachse bewirkt, daß das zweite Befestigungselement nicht mehr mit den hierfür vorgesehenen Befestigungsmitteln am Fahrzeug in Eingriff bringbar ist. Infolgedessen wird dem Monteur hierdurch die falsche Einbaulage signalisiert.

Ferner bevorzugt ist das zweite Befestigungselement breiter als das erste Befestigungselement ausgebildet. In anderen Worten ist die Erstreckung des zweiten Befestigungselements in einer Querrichtung des Stoßdämpfers größer als diejenige des ersten Befestigungselements. Die Querrichtung des Stoßdämpfers steht im wesentlichen senkrecht bzw. orthogonal zur Stoßdämpferlängsachse. Aufgrund der unterschiedlichen Breitenabmessungen des ersten und zweiten Befestigungselements wird vorteilhafterweise gewährleistet, daß eine nicht ordnungsgemäße Einbaulage des Stoßdämpfers, bei welchem der erste Befestigungsabschnitt an den für den zweiten Befestigungsabschnitt vorgesehenen Befestigungsmitteln des Fahrzeugs angeordnet wird, dem Monteur dadurch signalisiert wird, daß ein Eingriff zwischen dem jeweiligen Befestigungselement und dem entsprechenden Befestigungsmittel bzw. -punkt des Fahrzeugrahmens nicht oder nicht ordnungsgemäß möglich ist.

Erfindungsgemäß umfassen der erste und zweite Abschnitt einen Zylinder und einen in diesem geführten Kolben. An dem Kolben ist vorteilhafterweise eine Kolbenstange angeordnet, um den Kolben in dem vorzugsweise mit Öl befüllten Zylinder zu führen. Bei einer axialen Bewegung der Kolbenstange oder des Zylinders wird das Öl durch Ventilöffnungen bzw. Durchflußkanäle im Kolben geführt, wobei mit der Geschwindigkeit der Kolbenbewegung der Strömungswiderstand und damit die Dämpfungswirkung ansteigt.

Zweckmäßigerweise ist in dem Zylinder zumindest ein in Bodennähe angeordnetes Ventil vorgesehen, welches asymmetrisch angeordnete Ventilöffnungen aufweist. Der Stoßdämpfer ist somit vorteilhafterweise als Zweirohrstoßdämpfer ausgebildet. Bei diesem ist ein Arbeitszylinder und ein hierzu im wesentlichen koaxial angeordnetes Behälterrohr vorgesehen, welche zwei Räume definieren: den Arbeitsraum innerhalb des Arbeitszylinders, in dem sich der Kolben und die Kolbenstange bewegen, und den ringförmigen Ölvorratsraum zwischen Arbeitszylinder und Behälterrohr, der dazu dient, die durch die Bewegungen der Kolbenstange verursachten Ölvolumenänderungen im Arbeitsraum auszugleichen, wobei Arbeitsraum und Ölvorratsraum durch das in Bodennähe angeordnete Ventil voneinander getrennt sind. Der Begriff "in Bodennähe" ist hierbei insbesondere im Hinblick auf die vorgesehene Einbaulage des Stoßdämpfers derart zu verstehen, daß das Ventil im unteren Bereich des Stoßdämpfers angeordnet ist. Die asymmetrische Anordnung der Ventilöffnungen bzw. Durchflußkanäle ist besonders vorteilhaft bei einer geneigten Einbaulage des Stoßdämpfers. Die Ventilöffnungen sind hierbei vorteilhafterweise insbesondere in einem Kreissegment des Ventils angeordnet, welches nach unten ausgerichtet bzw. den tiefsten Punkt des Ventils definiert. Hierdurch wird gewährleistet, daß die Ventilöffnungen auch bei sehr schrägen bzw. fast horizontalen Einbaulagen des Stoßdämpfers von Öl durchströmt werden können.

Zweckmäßigerweise umfaßt der erste Abschnitt den Kolben und der zweite Abschnitt den Zylinder. Es versteht sich, daß der zweite Abschnitt ebenfalls durch den Kolben und der erste Abschnitt durch den Zylinder definiert werden können.

Erfindungsgemäß sind das erste und zweite Befestigungselement zylinderförmig, vorzugsweise hohlzylinderförmig ausgebildet. Hierbei können die Befestigungselemente beliebige Querschnittsformen aufweisen, wobei diese besonders vorteilhafterweise als Buchse oder Rohr ausgebildet sind, um mittels zugeordneter Befestigungsmittel, wie Schrauben oder Bolzen, in Eingriff zu gelangen.

Vorzugsweise sind das erste und/oder zweite Befestigungselement im ersten bzw. zweiten Befestigungsabschnitt elastisch bzw. rückstellfähig gelagert. Der erste bzw. zweite Befestigungsabschnitt definiert hierbei insbesondere zweckmäßigerweise eine Buchse oder ein Rohr, in welchem im wesentlichen konzentrisch oder koaxial das erste bzw. zweite Befestigungselement derart angeordnet ist, daß zwischen dem Befestigungselement und dem Befestigungsabschnitt eine Gummihülse bzw. -muffe oder ein Gummilager angeordnet ist.

Weitere Vorteile und Merkmale ergeben sich aus der nachfolgenden Beschreibung einer bevorzugten Ausführungsform der Erfindung mit Bezug auf die beigefügten Zeichnungen. Es zeigen:
- Fig. 1: eine Querschnittsansicht einer bevorzugten Ausführungsform des erfindungsgemäßen Stoßdämpfers.
- Fig. 2: eine Draufsicht sowie vergrößerte Teilansichten einer Ausführungsform des erfindungsgemäßen Stoßdämpfers im eingebautem Zustand.

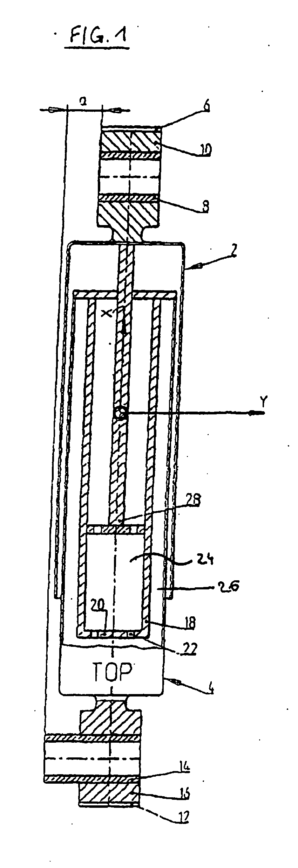

Fig. 1 zeigt eine bevorzugte Ausführungsform des erfindungsgemäßen Stoß- bzw. Schwingungsdämpfers im Querschnitt. Der Stoßdämpfer weist einen ersten Abschnitt 2 sowie einen zweiten Abschnitt 4 auf, welche vorzugsweise gegeneinander beweglich bzw. verschiebbar entlang einer Längsachse x des Stoßdämpfers sind.

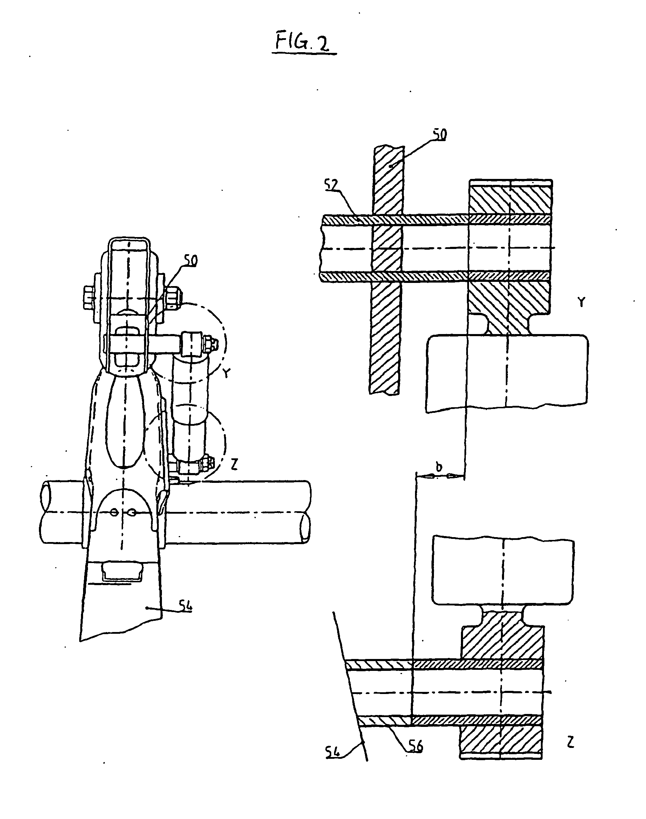

Der erste Abschnitt 2 weist an seinem distalen Endbereich einen ersten Befestigungsabschnitt 6 auf. Der erste Befestigungsabschnitt 6 ist vorteilhafterweise als Auge bzw. Rohr ausgebildet, um ein erstes Befestigungselement 8 darin im wesentlichen konzentrisch aufzunehmen. Das erste Befestigungselement 8 ist über ein elastisches Gummilager 10 im ersten Befestigungsabschnitt 6 aufgenommen bzw. befestigt. Das Gummilager 10 dient vorteilhafterweise der Kompensation von kleinen Relativbewegungen zwischen dem ersten Abschnitt 2 und einem Rahmenelement des Fahrzeugs, an welchem dieser befestigt wird (vgl. Fig. 2). Die Befestigung erfolgt vorteilhafterweise über eine Schraube bzw. einen Bolzen, welcher das vorteilhafterweise hülsen- bzw. rohrförmige erste Befestigungselement 8 durchgreift und am Rahmenelement befestigt ist.

Im wesentlichen gegenüberliegend zum ersten Abschnitt 2 weist der zweite Abschnitt 4 an seinem distalen Endbereich einen zweiten Befestigungsabschnitt 12 auf. Der zweite Befestigungsabschnitt 12 ist - entsprechend dem ersten Befestigungsabschnitt 6 - als rohrförmiges Befestigungsauge ausgebildet. Zur Befestigung des zweiten Abschnitts 4 an einem Fahrzeugachsteil ist im zweiten Befestigungsabschnitt 12 im wesentlich konzentrisch bzw. koaxial ein zweites Befestigungselement 14 über ein Gummilager 16 befestigt. Das Gummilager 16 dient, wie das Gummilager 10, der Kompensation von kleinen Versatzbewegungen zwischen dem zweiten Befestigungsabschnitt 12 und dem zweiten Befestigungselement 14, welches über entsprechende Befestigungsmittel, wie z.B. Schrauben oder Bolzen, mit dem Fahrzeugachselement verbunden ist.

Das erste Befestigungselement 8 ist vorteilhafterweise zur Stoßdämpferlängsachse x im wesentlichen mittig bzw. symmetrisch angeordnet, wohingegen das zweite Befestigungselement 14 zur Stoßdämpferlängsachse x im wesentlichen außermittig bzw. asymmetrisch angeordnet ist. Entsprechend schneidet die Stoßdämpferlängsachse x im wesentlichen die Mitte des ersten Befestigungselements 8, wohingegen die Mitte des zweiten Befestigungselements 14 von der Stoßdämpferlängsachse x beabstandet ist (in der dargestellten Ausführungsform nach links beabstandet). Besonders vorteilhafterweise ist das zweite Befestigungselement 14 breiter als das erste Befestigungselement 8 ausgebildet, d.h. das zweite Befestigungselement 14 weist vorteilhafterweise eine Erstreckung in Querrichtung y auf, die größer ist als die Erstreckung des ersten Befestigungselements 8 in Querrichtung y. Die Querrichtung y ist hierbei im wesentlichen senkrecht bzw. orthogonal zur Stoßdämpferlängsachse x angeordnet. Bei einer Ausbildung des ersten Befestigungselements 8 und/oder zweiten Befestigungselements 14 als Zylinder oder Hohlzylinder ist die Querrichtung y im wesentlichen parallel zur Rotationsachse des ersten Befestigungselements 8 und/oder zweiten Befestigungselements 14. Durch die geometrisch verschiedene Ausbildung und die in bezug auf die Stoßdämpferlängsachse verschiede Anordnung von erstem Befestigungselement 8 und zweitem Befestigungselement 14 wird somit ein Stoßdämpfer bzw. Schwingungsdämpfer bereitgestellt, dessen Einbaulage vorbestimmt bzw. festgelegt ist. Insbesondere ist eine Montage des erfindungsgemäßen Stoßdämpfers um 180 Grad um die Längsachse verdreht oder eine Montage des erfindungsgemäßen Stoßdämpfers (insbesondere eines Stoßdämpfers mit nach unten weisendem Bodenventil 20), bei welchem der erste Befestigungsabschnitt 6 an der für den zweiten Befestigungsabschnitt 12 vorgesehenen Position befestigt wird, nicht möglich.

Es versteht sich, dass das erste Befestigungselement 8 und/oder das zweite Befestigungselement 14 auch als Bolzen ausgebildet sein können, die einen beliebigen Querschnitt aufweisen. Der Querschnitt ist hierbei vorzugsweise rund bzw. kreisrund. Er kann jedoch ebenfalls auch eckig sein, insbesondere sechs- oder achteckig.

Dies ist insbesondere besonders vorteilhaft bei der Ausbildung des Stoßdämpfers als Zweirohrstoßdämpfer. Bei diesem ist in dem Zylinder 18 des zweiten Abschnitts 4 ein Ventil 20 in Bodennähe des Zylinders 18 vorgesehen. Das Ventil 20 weist vorzugsweise asymmetrisch angeordnete Ventilöffnungen 22 auf. Die Ventilöffnungen 22 dienen insbesondere dem Durchfluss des Stoßdämpferöls aus einem Arbeitsraum 24 in einen ringförmigen Ölvorratsraum 26, um die durch die Bewegungen des Kolbens 28 des ersten Abschnitts 2 verursachten Ölvolumenänderungen im Arbeitsraum 24 auszugleichen. Bei einer liegenden bzw. stark geneigten Anordnung des Stoßdämpfers ist es besonders vorteilhaft, die Ventilöffnungen 22 derart asymmetrisch anzuordnen, daß diese möglichst tief liegen, um einen kontinuierlichen Öldurchfluß zu gewährleisten.

In Fig. 2 ist eine Ausführungsform des erfindungsgemäßen Stoß- bzw. Schwingungsdämpfers im eingebauten Zustand dargestellt. Der erste Befestigungsabschnitt 6 ist hierbei ausgelegt, an einem Rahmenelement 50 des Fahrzeugs befestigt zu werden. Die Befestigung erfolgt an vorteilhafterweise rohrförmigen Befestigungsmitteln 52, die, gemeinsam mit dem ersten Befestigungselement 8, von einem Bolzen oder einer Schraube durchgriffen werden können. In entsprechender Weise erfolgt die Befestigung des zweiten Befestigungsabschnitts 12 an einem zum Rahmenelement 50 bewegbaren Achselement 54 des Fahrzeugs, welches ebenfalls rohrförmige Befestigungsmittel 56 aufweist, die, gemeinsam mit dem zweiten Befestigungselement 14, von einem Bolzen oder einer Schraube durchgriffen werden können.

Wie in Fig. 1 ersichtlich, sind die im wesentlichen zur Stoßdämpferlängsachse x parallelen Befestigungsebenen des ersten Befestigungselements 8 und des zweiten Befestigungselements 14 um den Abstand a voneinander beabstandet. Der Abstand a entspricht hierbei dem Abstand b, welchen die Befestigungsebenen der Befestigungsmittel 52 und 56 voneinander haben. Daher ist die Montage des erfindungsgemäßen Stoßdämpfers.- sofern das asymmetrische Bodenventil 20 nach unten weisen soll - in lediglich einer vorbestimmten Lage möglich, da eine Verdrehung oder Verschwenkung des Stoßdämpfers dazu führen würde, daß die Befestigungsmittel 52 nicht mehr mit dem ersten Befestigungselement 8 kontaktieren würden und/oder die Befestigungsmittel 56 nicht mehr mit dem zweiten Befestigungselement 14 kontaktieren bzw. in Eingriff stehen würden. Infolgedessen ist für den Monteur die vorbestimmte Einbaulage klar erkennbar.

Besonders bevorzugt weisen das erste Befestigungselement 8 und/oder das zweite Befestigungselement 14 eine Kontaktfläche zum Kontakt mit dem Befestigungsmittel 52 bzw. dem Befestigungsmittel 56 auf. Bei einer rohr- oder zylinder- oder bolzen- oder hohlzylinderförmigen Ausbildung des ersten Befestigungselements 8 oder zweiten Befestigungselements 14 sind die Kontaktflächen diejenigen Stirnflächen, die den Befestigungsmitteln 52 des Rahmenelements 50 bzw. dem Befestigungsmittel 56 des Achselements 54 zugewandt sind. Die Kontaktflächen sind vorzugsweise plan bzw. eben ausgebildet, wobei deren Kontaktflächenebene im Wesentlichen mit der Stoßdämpferlängsachse x fluchtet. In anderen Worten steht die Kontaktflächenebene im Wesentlichen senkrecht zur Stoßdämpferquerachse y bzw. zur Längsachse des als Zylinder bzw. Hohlzylinder bzw. Bolzen ausgebildeten ersten und zweiten Befestigungselement 8, 14. Die Kontaktfläche des ersten Befestigungselements 8 bzw. zweiten Befestigungselements 14 kann alternativ jedoch auch geneigt zur Stoßdämpferlängsachse x ausgebildet sein, sodass die Kontaktflächenebene nicht senkrecht zu der Stoßdämpferquerachse y bzw. der Längsachse des ersten und zweiten Befestigungselements 8, 14 steht. Es versteht sich, dass die Kontaktfläche zusätzlich oder alternativ eine nicht-ebene oberflächenkonfiguration aufweisen kann, beispielsweise in Form einer Verzahnung, Rändelung oder mit Nuten versehen sein kann, um einen optimierten Eingriff mit dem entsprechenden Fahrzeugteil zu gewährleisten.

### Bezugszeichenliste

- 2: erster Abschnitt
- 4: zweiter Abschnitt
- 6: erster Befestigungsabschnitt
- 8: erstes Befestigungselement .
- 10: Gummilager
- 12: zweiter Befestigungsabschnitt
- 14: zweites Befestigungselement
- 16: Gummilager
- 18: Zylinder
- 20: Ventil
- 22: Ventilöffnungen
- 24: Arbeitsraum
- 26: Ölvorratsraum
- 28: Kolben
- 50: Rahmenelement
- 52: Befestigungsmittel
- 54: Achselement
- 56: Befestigungsmittel
- a, b: Abstand
- x: Stoßdämpferlängsachse
- y: Stoßdämpferquerachse

## Patentansprüche

1. Stoßdämpfer, insbesondere für Kraftfahrzeuge, umfassend einen ersten und zweiten gegeneinander beweglichen Abschnitt (2, 4), wobei der erste und zweite Abschnitt (2, 4) jeweils am distalen Endbereich einen ersten bzw. zweiten Befestigungsabschnitt (6, 12) aufweist, und wobei an dem ersten Befestigungsabschnitt (6) ein erstes Befestigungselement (8) und an dem zweiten Befestigungsabschnitt (12) ein zweites Befestigungselement (14) vorgesehen sind, welche verschieden ausgebildet und in Bezug auf die Stoßdämpferlängsachse (x) verschieden angeordnet sind, wobei das erste und zweite Befestigungselement (8, 14) zylinderförmig ausgebildet sind, deren Längsachsen quer zur Stoßdämpferlängsachse (x) ausgerichtet sind, wobei der erste und der zweite Abschnitt (2, 4) einen Zylinder (18) und einen in diesem geführten Kolben (28) umfassen und wobei in dem Zylinder (18) ein in Bodennähe angeordnetes Ventil (20) vorgesehen ist, welches asymmetrisch angeordnete Ventilöffnungen (22) oder Durchflusskanäle aufweist.

2. Stoßdämpfer nach Anspruch 1, wobei das erste Befestigungselement (8) zur Stoßdämpferlängsachse (x) im Wesentlichen mittig angeordnet ist.

3. Stoßdämpfer nach einem der vorhergehenden Ansprüche, wobei das zweite Befestigungselement (14) zur Stoßdämpferlängsachse (x) im Wesentlichen außermittig angeordnet ist.

4. Stoßdämpfer nach einem der vorgehenden Ansprüche, wobei das zweite Befestigungselement (14) breiter als das erste Befestigungselement (8) ausgebildet ist.

5. Stoßdämpfer nach einem der Ansprüche 4 wobei der erste Abschnitt (2) den Kolben (28) und der zweite Abschnitt (4) den Zylinder (18) umfassen.

6. Stoßdämpfer nach einem der vorgehenden Ansprüche, wobei das erste und/oder zweite Befestigungselement (8, 14) hohlzylinderförmig ausgebildet sind.

7. Stoßdämpfer nach einem der vorhergehenden Ansprüche, wobei das erste und/oder zweite Befestigungselement (8, 14) im ersten bzw. zweiten Befestigungsabschnitt (6, 12) elastisch gelagert sind.

## Claims

1. Shock absorber, particularly for motor vehicles, comprising a first and a second section (2, 4) able to move relative to each other, wherein the first and the second section (2, 4) each comprise a first or second fixing section (6, 12) at the distal end portion, respectively,
and wherein the first fixing section (6) is provided with a first fixing member (8) and the second fixing section (12) is provided with a second fixing member (14), both being formed differently and being arranged differently with respect to the longitudinal axis (x) of the shock absorber,
wherein the first and second fixing members (8, 14) have a cylindrical shape with their longitudinal axes being directed transversely to the longitudinal axis (x) of the shock absorber,
wherein the first and the second section (2, 4) comprise a cylinder (18) and a piston (28) guided therein, and
wherein in the cylinder (18) there is provided a valve (20) which is arranged close to the bottom and which comprises asymmetrically arranged valve openings (22) or flow channels.

2. Shock absorber according to claim 1, wherein the first fixing member (8) is located substantially centric with respect to the longitudinal axis (x) of the shock absorber.

3. Shock absorber according to any one of the preceding claims, wherein the second fixing member (14) is located substantially excentric with respect to the longitudinal axis (x) of the shock absorber.

4. Shock absorber according to any one of the preceding claims, wherein the width of the second fixing member (14) is larger than that of the first fixing member (8).

5. Shock absorber according to claim 4, wherein the first section (2) comprises the piston (28) and the second section (4) comprises the cylinder (18).

6. Shock absorber according to any one of the preceding claims, wherein the first and/or the second fixing member(s) (8, 14) is/are formed as a hollow cylinder.

7. Shock absorber according to any one of the preceding claims, wherein the first and/or the second fixing member(s) (8, 14) is/are supported elastically in the first or second fixing section (6, 12), respectively.

## Revendications

1. Amortisseur, en particulier pour véhicules automobiles, comprenant un premier tronçon et un second tronçon (2, 4) mobiles l'un par rapport à l'autre, tels que le premier tronçon et le second tronçon (2, 4) comprennent un premier et respectivement un second tronçon de fixation (6, 12) au niveau de leur zone terminale distale,
et dans lequel un premier élément de fixation (8) est prévu sur le premier tronçon de fixation (6) et un second élément de fixation (14) est prévu sur le second tronçon de fixation (12), lesquels sont réalisés de façon différente et sont agencés de manière différente par rapport à l'axe (x) de l'amortisseur, dans lequel le premier et le second élément de fixation (8, 14) sont réalisés sous forme de cylindres dont les axes longitudinaux sont orientés transversalement à l'axe longitudinal (x) de l'amortisseur, dans lequel le premier et le second tronçons (2, 4) comprennent un cylindre (18) et un piston (28) guidé dans celui-ci, et dans lequel une soupape (20) agencée au voisinage du fond est prévue dans le cylindre (18), laquelle comporte des ouvertures de soupape (22) ou des canaux d'écoulement agencé(e)s de manière asymétrique.

2. Amortisseur selon la revendication 1, dans lequel le premier élément de fixation (8) est agencé sensiblement au milieu par rapport à l'axe longitudinal (x) de l'amortisseur.

3. Amortisseur selon l'une des revendications précédentes, dans lequel le second élément de fixation (14) est agencé de façon sensiblement excentrée par rapport à l'axe longitudinal (x) de l'amortisseur.

4. Amortisseur selon l'une des revendications précédentes, dans lequel le second élément de fixation (14) est réalisé plus large que le premier élément de fixation (8).

5. Amortisseur selon la revendication 4, dans lequel le premier tronçon (2) comprend le piston (28) et le second tronçon (4) comprend le cylindre (18).

6. Amortisseur selon l'une des revendications précédentes, dans lequel le premier et/ou le second élément de fixation (8, 14) sont réalisés sous forme de cylindres creux.

7. Amortisseur selon l'une des revendications précédentes, dans lequel le premier et/ou le second élément de fixation (8, 14) sont montés de manière élastique dans le premier ou respectivement le second tronçon de fixation (6, 12).
